# FASCICULE DE BREVET EUROPEEN

(11) **EP 2 135 129 B1**
(45) Date de publication et mention de la délivrance du brevet: **08.01.2020**
(21) Numéro de dépôt: 07788942.6
(22) Date de dépôt: 12.04.2007
(51) Int. Cl.: G02C 5/00, G02C 5/14

(54) **FIXATION RAPIDE POUR BRANCHE DE LUNETTES**
MITTEL ZUR SCHNELLEN FIXIERUNG FÜR BRILLEN-SEITENSTÜCKE
MEANS OF RAPID FIXATION FOR SPECTACLE SIDE-PIECE

(43) Date de publication de la demande: 23.12.2009
(73) Titulaire: Killine Optical Ltd, Macao (MO)
(72) Inventeur: GARDAZ, François, 06000 Nice (FR)
(74) Mandataire: Decobert, Jean-Pascal
(86) Numéro de dépôt international: PCT/FR2007/051104
(87) Numéro de publication internationale: WO 2008/125743

(56) Documents cités:
- DE-A1- 2 717 470
- FR-A- 2 543 312
- FR-A- 2 875 609
- US-A- 5 007 728
- US-A- 5 652 637
- US-A- 5 748 281
- US-A1- 2004 160 570

## Description

La présente invention concerne une fixation rapide pour branche de lunettes.

Elle trouvera son application pour tous types de lunettes de vue, solaires ou encore de sécurité.

On connaît dans l'état de la technique des branches de lunettes amovibles comme décrit dans les documents US 5,007,728 ou US 6,834,952.

Ces deux documents décrivent des branches de lunettes qui s'attachent à une monture par un système de clip comprenant un élément ayant une élasticité apte à être déformé pour coopérer avec une ouverture.

Les dispositifs décrits dans ces documents présentent certains inconvénients.

En effet, l'élément élastique servant de clip n'est pas robuste, l'utilisateur peut accidentellement ou intentionnellement tirer l'élément élastique vers le haut ou latéralement au-delà de sa limite élastique ou de rupture. L'élément élastique est alors endommagé et ne peut plus être utilisé.

Par conséquent, il existe le besoin de proposer des branches de lunettes amovibles dont la fixation est rapide et robuste. US2004/160570 A1 divulgue une fixation rapide pour branche de lunettes selon le préambule de la revendication 1.

A cet effet, l'invention concerne une fixation rapide pour branche de lunettes selon la revendication indépendante 1.

Les moyens de guidage : la lame flexible est guidée dans sa déformation dans une direction précise et déterminée. Son mouvement est plus précis et bien délimité notamment latéralement.

On notera que la tige et le canal peuvent être de toute sorte de sections cylindriques, rectangulaires ou autres, en étant toutefois aptes à coopérer.

La fixation selon l'invention est robuste et permet une utilisation moins minutieuse et plus fréquente que les dispositifs décrits dans l'état de la technique.

Les moyens de limitation : ils sont destinés à limiter le débattement de la lame flexible par des butées en enfoncement et en ouverture, ce qui contribue à améliorer la solidité de la lame flexible.

En effet, la lame flexible selon l'invention ne peut être détériorée par une ouverture ou un enfoncement excessif.

Selon des variantes de l'invention, la fixation rapide est telle que :
- le premier élément est une armature de branche apte à relier un deuxième élément au reste d'une monture de lunettes et le deuxième élément est une branche de lunettes.
- le renflement est réalisé par poinçonnage - cisaillage
- l'angle formé entre la tige et la lame flexible est configuré pour venir en butée contre l'entrée extérieure du canal de sorte à limiter le débattement de la lame flexible en enfoncement.
- La lame flexible et la tige sont constituées d'une pièce monobloc.
- la lame flexible a une face inférieure configurée pour limiter l'espace entre la lame flexible et le premier élément.
- le premier élément est configuré pour limiter l'espace avec la lame flexible
- la lame flexible est soudée au premier élément
- le premier élément est fabriqué par estampage

L'invention concerne aussi une monture de lunettes comprenant au moins une fixation rapide pour branche de lunettes telle que décrite précédemment.

Les dessins ci-joints sont donnés à titre d'exemples et ne sont pas limitatifs de l'invention. Ils représentent seulement un mode de réalisation de l'invention et permettront de la comprendre aisément.
Figure 1 : vue des éléments constituant la fixation rapide et de la monture de lunettes selon l'invention.
Figure 2 : étapes successives du fonctionnement de la fixation rapide selon l'invention.
Figure 3 : vue en coupe de la fixation rapide selon l'invention.
Figure 4 : vue de détail des moyens de guidage et de limitation de la lame flexible en position ouverte.
Figure 5 : vue de détail des moyens de guidage et de limitation de la lame flexible en position enfoncée.

La fixation rapide selon l'invention comprend un premier élément muni d'une lame flexible 2 configurée pour coopérer avec une lucarne 13 positionné sur un deuxième élément. De manière caractéristique, elle comprend des moyens de guidage et de limitation de déformation de la lame flexible 2.

Selon un mode de réalisation préféré de l'invention, le premier élément est une armature de branche 3 apte à relier un deuxième élément à un tenon 11 d'une monture de lunettes et le deuxième élément est une branche de lunettes 1.

Cette disposition semble plus économique pour l'utilisateur car l'armature de branche 3 est fabriquée et vendue simultanément avec la monture de lunettes et l'utilisateur rachète uniquement de nouvelles branches de lunettes 1 selon ses besoins.

Cependant, il est possible de prévoir la disposition inverse, c'est-à-dire où la lame flexible 2 est située au niveau de la branche de lunettes 1 et la lucarne 13 sur une pièce apte à relier la branche de lunettes 1 au tenon 11 de la monture de lunettes.

Les moyens de guidage et de limitation de déformation selon l'invention sont avantageux puisqu'ils limitent les déformations accidentelles ou intentionnelles latérales ou verticales pouvant endommager la lame flexible 2.

Les moyens de guidage sont constitués d'un canal 4 transversal à l'armature de branche 3 et configuré pour recevoir une tige 5 reliée à la lame flexible 2 de sorte à guider latéralement la déformation verticale de la lame flexible 2.

Le canal 4 peut avoir une section rectangulaire, cylindrique ou autre, de même que la tige 5.

Cependant, la tige 5 doit pouvoir coulisser dans le canal 4.

La tige 5 est avantageusement, sensiblement positionnée perpendiculairement à l'axe longitudinal de la lame flexible 2.

De manière préférentielle pour augmenter la solidité de la fixation rapide selon l'invention, la tige 5 et la lame flexible 2 sont constituées d'une pièce unique monobloc. Ainsi, la lame flexible 2 est fabriquée directement avec la tige 5.

Toutefois, il peut être envisagé de rapporté la tige 5 par soudure ou autre sur la lame flexible 2.

Avantageusement, la tige 5 est pourvue à son extrémité libre 6 d'un renflement 7 configuré pour limiter le débattement de la tige 5 au travers du canal 4 en ouverture.

Ainsi, le renflement 7 vient en butée contre l'entrée intérieure du canal 4 limitant la sortie de la tige 5 hors du canal 4 et de ce fait la déformation verticale vers le haut de la lame flexible 2.

La lame flexible 2 ne peut pas être excessivement tirée vers l'extérieur au-delà de sa limite élastique de rupture.

Le mouvement de déformation en enfoncement de la lame flexible 2 est aussi contrôlé par une butée en enfoncement constituée par l'angle 8 formé entre la tige 5 et la lame flexible 2.

Lorsque la lame flexible 2 subit une pression en enfoncement, l'angle 8 vient buter contre l'entrée extérieure 10 du canal 4.

Ainsi, la lame flexible 2 ne peut être excessivement poussée en enfoncement.

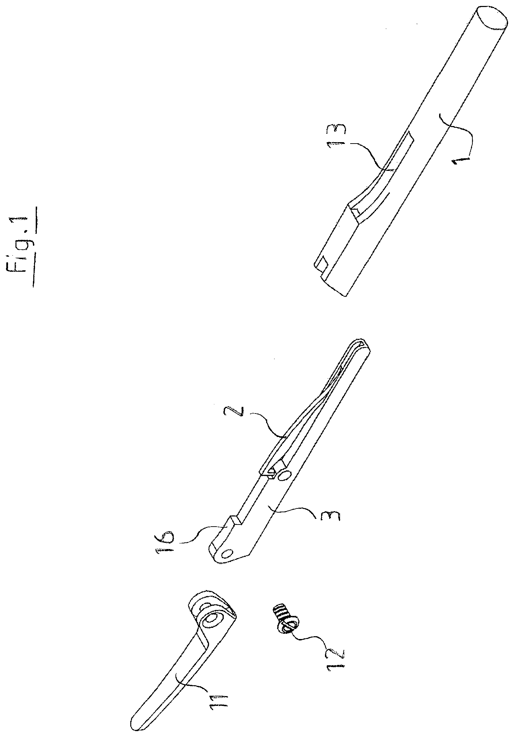

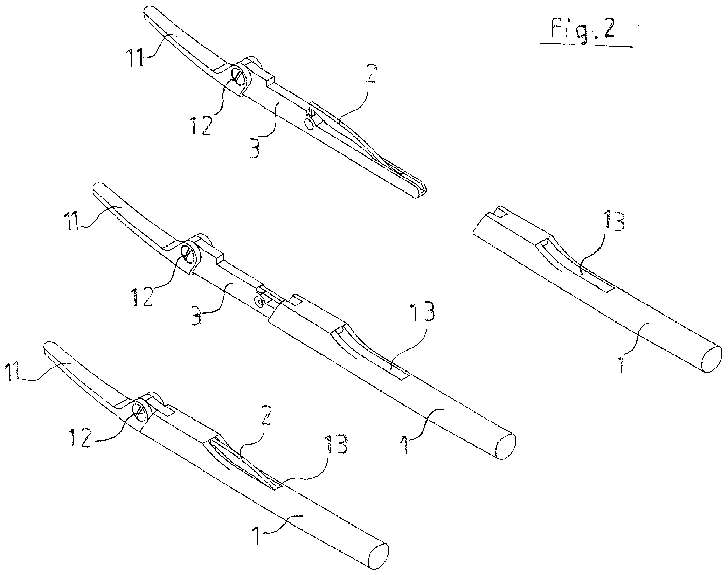

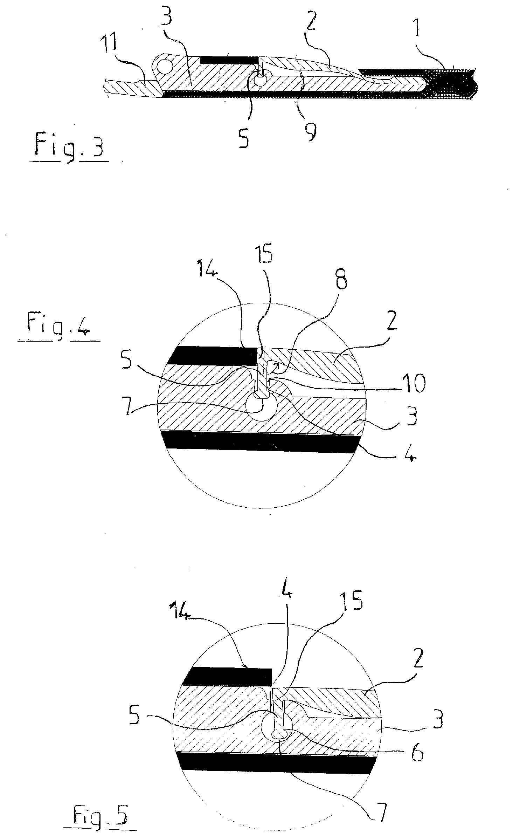

Selon une possibilité représentée dans les figures 1 à 5, l'extrémité intérieure du canal 4 s'ouvre sur une cavité sensiblement circulaire. Cette cavité a pour but de faciliter la fabrication de la fixation rapide selon l'invention, en particulier du renflement 7.

Ainsi la tige 5 est insérée dans le canal 4, son extrémité libre 6 ne possédant pas encore de renflement 7. Des outils de poinçonnement - cisaillement sont alors insérés au niveau de la cavité sensiblement cylindrique pour permettre la formation du renflement 7.

Selon une possibilité, l'outil de poinçonnement - cisaillement est constitué de deux poinçons. Le premier est un demi cylindre .Le deuxième est cylindrique constitué de deux demi-cercles en escalier, dont l'un cisaille et l'autre écrase l'extrémité libre 6 de la tige 5 pour former le renflement 7. Cet outil est avantageux car il permet de contrôler exactement la longueur de la tige 5 pour que celle-ci ne soit pas endommagée lorsque la lame flexible 2 est enfoncée.

D'autres dispositions pour la fabrication du renflement 7 peuvent être envisagées.

De manière préférentielle, la lame flexible 2 est soudée à l'armature de branche 3. Pour cacher cette soudure, une rainure longitudinale peut être prévue dans l'armature 3, ainsi la soudure sera réalisée au fond de la rainure sans être inesthétique.

Pour limiter les coûts et les délais de fabrication l'armature de branche 3 est formée par estampage à partir d'une tôle plate.

Il peut être prévu que cette fixation rapide selon l'invention soit positionnée plus en arrière de la branche de lunettes, par exemple au niveau de la branche se situant prés des oreilles de l'utilisateur. Cette disposition peut permettre la fixation d'appareil auditif pour malentendant ou de casque audio ou autre élément.

La fixation rapide selon l'invention peut être fabriquée indifféremment en matériau plastique ou en matériau métallique, ou par une combinaison des deux.

Par exemple, l'armature de branche 3 peut être fabriquée en métal par la technique de l'estampage et la branche de lunettes 1 peut être fabriquée en plastique pour permettre des coloris, des formes et des motifs divers et variés.

D'un point de vue esthétique, il est préférable que la lucarne 13 de la fixation rapide des branches de lunettes se situe sur la face intérieure, en regard de la tête de l'utilisateur, pour ne plus être visible une fois que les lunettes sont portées par l'utilisateur.

La fixation rapide selon l'invention peut être fixée directement à un tenon 11 d'une monture de lunettes métallique ou plastique ou autre ou directement sur des verres.

Avantageusement, la fixation rapide est rattachée au tenon 11 de la monture de lunettes par une vis de charnière 12 coopérant avec le tenon 11 et l'armature de branche 3. Le tenon 11 peut être relié soit à un drageoir soit directement aux verres d'une monture de lunettes.

Avantageusement, la lame flexible 2 a une face inférieure 9 configurée pour limiter l'espace entre la lame flexible 2 et l'armature de branche 3, ce qui limite la possibilité que des cheveux ou d'autres petits objets se coincent entre la lame flexible 2 et l'armature de branche 3 entraînant le blocage de la fixation rapide.

Selon une autre possibilité, la rainure longitudinale dans laquelle la lame flexible 2 est soudée peut être de toute la longueur de l'armature de branche 3 et être assez profonde avec des parois assez hautes pour contribuer à limiter l'espace entre la lame flexible 2 et l'armature de branche 3. Cet espace peut même être nul.

La lame flexible 2 est une lame de ressort. La lame flexible 2 a une position ouverte lorsqu'elle est en ouverture et ne subit aucune pression. L'ouverture de lame flexible 2 est limitée en ouverture par le renflement 7 venant en butée contre l'entrée intérieure du canal 4. Lorsqu'une pression en enfoncement est générée, la lame flexible 2 a une position enfoncée et immédiatement lors de l'arrêt de la pression en enfoncement, la lame flexible 2 revient en position ouverte.

### Mode d'utilisation de la fixation rapide selon l'invention :

Lorsque l'utilisateur veut adapter une branche de lunettes 1 à sa monture de lunettes, il insère et fait glisser une branche de lunettes 1 sur l'armature de branche 3 reliée à un tenon 11 de la monture de lunettes par une vis de charnière 12, de sorte à mettre du même côté la lucarne 13 et la lame flexible 2.

L'armature de branche 3 sert de glissière permettant le guidage de la branche de lunettes 1 évidée pour permettre sa coopération avec l'armature de branche 3. En effet, la lame flexible 2 a avantageusement une face supérieure constituée pour favoriser le glissement de la branche de lunettes 1 sur l'armature de branche 3. Ainsi, il est préférable qu'elle ait une forme en pente.

La lame flexible 2 subit alors un enfoncement du fait de la pression créée par la branche de lunettes 1 et se trouve en position d'enfoncement. Cependant, la lame flexible 2 n'est pas suffisamment enfoncée pour faire intervenir la butée en enfoncement.

Lorsque la branche de lunettes 1 est insérée complètement, la lame flexible 2 subit une déformation d'ouverture en reprenant une position ouverte et vient se positionner dans la lucarne 13.

La branche de lunettes 1 est alors bloquée sur l'armature de branche 3 par la fixation rapide. La fixation rapide est configurée pour que la lame flexible 2 en position ouverte coopère par une face 15 avec le pourtour 14 de lucarne 13, bloquant le retrait de la branche de lunettes 1 de l'armature de branche 3. De même, la fixation rapide est configurée pour que la course d'insertion de la branche de lunettes 1 sur l'armature de branche 3 soit limitée avantageusement par une butée 16 de l'armature de branche 3.

La lame flexible 2 est limitée dans son débattement en ouverture par le renflement 7 venant en butée contre la face interne du canal 4 et non pas par la lucarne 13.

Avantageusement, la lucarne 13 est de forme sensiblement longitudinale de manière à coopérer avec la lame flexible 2 sensiblement de forme longitudinale.

Lorsque l'utilisateur veut retirer la branche de lunettes 1 de l'armature de branche 3, il génère une pression d'enfoncement sur lame flexible 2 située dans la lucarne 13 et génère un mouvement de translation en recul de la branche de lunettes 1 par rapport au reste de la monture de lunettes

Les différentes étapes citées précédemment se font alors dans l'autre sens.

La fixation rapide selon l'invention est avantageuse pour permettre à l'utilisateur de modifier selon la mode et ses envies, la matière, la forme, la texture, la couleur ou le motif de ses branches de lunettes.

### REFERENCES

1. Branche de lunettes
2. Lame flexible
3. Armature de branche
4. Canal
5. Tige
6. Extrémité libre
7. Renflement
8. Angle
9. Face inférieure
10. Entrée extérieure au canal
11. Tenon
12. Vis de Charnière
13. Lucarne
14. Pourtour de la lucarne
15. Face
16. Butée

## Revendications

1. Fixation rapide pour branche de lunettes (1) comprenant un premier élément muni d'une lame flexible (2) configurée pour coopérer avec une lucarne (13) positionnée sur un deuxième élément où le premier élément comprend des moyens de guidage et de limitation de déformation de la lame flexible (2) **caractérisée par le fait que** les moyens de guidage sont constitués d'un canal (4) transversal au premier élément configuré pour recevoir une tige (5) reliée à la lame flexible (2) de sorte à guider latéralement la déformation en flexion de la lame flexible (2) et en ce que la tige (5) est pourvue à son extrémité libre (6) d'un renflement (7) configuré pour limiter le débattement de la tige (5) au travers du canal (4) en ouverture.

2. Fixation selon la revendication 1 dans laquelle le premier élément est une armature de branche (3) apte à relier un deuxième élément au reste d'une monture de lunettes et le deuxième élément est une branche de lunettes (1).

3. Fixation selon l'une quelconque des revendications précédentes dans laquelle le renflement (7) est réalisé par poinçonnage - cisaillage.

4. Fixation selon l'une quelconque des revendications précédentes dans laquelle l'angle (8) formé entre la tige (5) et la lame flexible (2) est configuré pour venir en butée contre l'entrée extérieure (10) du canal (4) de sorte à limiter le débattement de la lame flexible (2) en enfoncement.

5. Fixation selon l'une quelconque des revendications précédentes dans laquelle la lame flexible (2) et la tige (5) sont constituées d'une pièce monobloc.

6. Fixation selon une quelconque des revendications précédentes dans laquelle la lame flexible (2) a une face inférieure (9) configurée pour limiter l'espace entre la lame flexible (2) et le premier élément.

7. Fixation selon une quelconque des revendications précédentes dans laquelle le premier élément est configuré pour limiter l'espace avec la lame flexible (2).

8. Fixation selon une quelconque des revendications précédentes dans laquelle la lame flexible (2) est soudée au premier élément.

9. Fixation selon une quelconque des revendications précédentes dans laquelle le premier élément est fabriqué par estampage.

10. Monture de lunettes comprenant au moins une fixation rapide pour branche de lunettes telle que revendiquée dans une quelconque des revendications précédentes.

## Patentansprüche

1. Schnellbefestigung für einen Brillenbügel (1), umfassend ein erstes Element, das mit einer flexiblen Klinge (2) ausgestattet ist, die dafür konfiguriert ist, mit einem Durchbruch (13) zusammenzuwirken, der an einem zweiten Element positioniert ist, wobei das erste Element Mittel zum Führen und zum Begrenzen von Verformung der flexiblen Klinge (2) umfasst, **dadurch gekennzeichnet, dass** die Führungsmittel aus einem Kanal (4) quer zum ersten Element bestehen, der dafür konfiguriert ist, einen Schaft (5) aufzunehmen, der mit der flexiblen Klinge (2) verbunden ist, um die Biegeverformung der flexiblen Klinge (2) seitlich zu führen, und dadurch, dass der Schaft (5) an seinem freien Ende (6) mit einer Verdickung (7) versehen ist, die dafür konfiguriert ist, das Auslenken des Schafts (5) beim Öffnen durch den Kanal (4) zu begrenzen.

2. Befestigung nach Anspruch 1, wobei das erste Element ein Bügelscharnier (3) ist, das in der Lage ist, ein zweites Element mit dem Rest einer Brillenfassung zu verbinden, und das zweite Element ein Brillenbügel (1) ist.

3. Befestigung nach einem der vorstehenden Ansprüche, wobei die Verdickung (7) durch Stanzen / Scheren ausgeführt wird.

4. Befestigung nach einem der vorstehenden Ansprüche, wobei der zwischen dem Schaft (5) und der flexiblen Klinge (2) gebildete Winkel (8) dafür konfiguriert ist, am äußeren Eingang (10) des Kanals (4) in Anlage zu gehen, um das Auslenken der flexiblen Klinge (2) beim Eindrücken zu begrenzen.

5. Befestigung nach einem der vorstehenden Ansprüche, wobei die flexible Klinge (2) und der Schaft (5) aus einem einstückigen Teil bestehen.

6. Befestigung nach einem der vorstehenden Ansprüche, wobei die flexible Klinge (2) eine untere Fläche (9) aufweist, die dafür konfiguriert ist, den Abstand zwischen der flexiblen Klinge (2) und dem ersten Element zu begrenzen.

7. Befestigung nach einem der vorstehenden Ansprüche, wobei das erste Element dafür konfiguriert ist, den Abstand zur flexiblen Klinge (2) zu begrenzen.

8. Befestigung nach einem der vorstehenden Ansprüche, wobei die flexible Klinge (2) an das erste Element geschweißt ist.

9. Befestigung nach einem der vorstehenden Ansprüche, wobei das erste Element durch Prägen hergestellt wird.

10. Brillenfassung, die mindestens eine Schnellbefestigung für einen Brillenbügel wie in einem der vorstehenden Ansprüche beansprucht umfasst.

## Claims

1. Rapid fixation for spectacle side-piece (1) comprising a first element equipped with a flexible strip (2) configured to engage with a window (13) positioned on a second element where the first element comprises means for guiding and limiting deformation of the flexible strip (2), **characterised by** the fact that the guiding means are constituted of a transversal channel (4) to the first element configured to receive a rod (5) connected to the flexible strip (2) so as to laterally guide the bending deformation of the flexible strip (2) and in that the rod (5) is provided at the free end (6) thereof of a protrusion (7) configured to limit the articulation of the rod (5) through the channel (4) in opening.

2. Fixation according to claim 1, wherein the first element is a side-piece frame (3) capable of connecting a second element to the remainder of a spectacle mount and the second element is a spectacle side-piece (1).

3. Fixation according to any one of the preceding claims, wherein the protrusion (7) is made by punching/shearing.

4. Fixation according to any one of the preceding claims, wherein the angle (8) formed between the rod (5) and the flexible strip (2) is configured to abut against the outer inlet (10) of the channel (4) so as to limit the articulation of the sunken flexible strip (2).

5. Fixation according to any one of the preceding claims, wherein the flexible strip (2) and the rod (5) are constituted of a one-piece part.

6. Fixation according to any one of the preceding claims, wherein the flexible strip (2) has a lower face (9) configured to limit the space between the flexible strip (2) and the first element.

7. Fixation according to any one of the preceding claims, wherein the first element is configured to limit the space with the flexible strip (2).

8. Fixation according to any one of the preceding claims, wherein the flexible strip (2) is welded to the first element.

9. Fixation according to any one of the preceding claims, wherein the first element is produced by stamping.

10. Spectacle mount comprising at least one rapid fixation for spectacle side-piece such as claimed in any one of the preceding claims.
